# EUROPEAN PATENT SPECIFICATION

(11) **EP 0 437 253 B1**
(45) Date of publication and mention of the grant of the patent: **07.12.1994**
(21) Application number: 91100239.2
(22) Date of filing: 09.01.1991
(51) Int. Cl.: B01L 3/02, G01N 1/28

(54) **Continuously adjustable diluting device for mixing predetermined volumes of liquid**
Kontinuierlich verstellbare Verdünnungsvorrichtung zum Mischen von vorbestimmten Flüssigkeitsvolumen
Appareil de dilution réglable continûment pour mélanger des volumes déterminés de liquides

(30) Priority: 10.01.1990 US 463283
(43) Date of publication of application: 17.07.1991
(73) Proprietor: Gilson, Warren E., Madison, Wisconsin 53705 (US)
(72) Inventor: Gilson, Warren E., Madison, Wisconsin 53705 (US)
(74) Representative: Bauer, Robert, Dipl.-Ing.

(56) References cited:
- DE-A- 2 250 621
- JP-A- 2 290 260
- US-A- 4 141 250
- US-A- 4 501 163
- US-A- 4 988 481

## Description

The present invention relates to an ajustable diluting device for mixing a predetermined volume of a liquid sample with a predetermined volume of a liquid diluent and including the features as specified in the pre-characterizing clause of claim 1.

Such a diluting device as disclosed in US Patent US-A-4,141,250 includes a plural piston liquid drawing assembly in combination with a digital volume indicator providing a digital readout for indicating the precise volume in milliliters of a sample of liquid to be drawn into the device and thereafter expelled after mixing with a predetermined volume of liquid diluent. Two coaxial shafts are provided along the central line of an alongate body for actuating the piston assembly and adjusting a stop, respectively. A volume adjustment mechanism for one of the liquid volumes is rotatably mounted in a recess of the body including opposed windows to expose this adjustment mechanism for manual adjustment operation. However, oftentimes diluting devices are handled by laboratory technicians wearing rubber gloves in order to avoid contamination and sometimes when carelessly manipulating the diluting device to a precisely selected volume, a portion of a thin rubber glove may become wedged or caught within a space existing between the adjustment mechanism and the adjacent wall surface of the recess. Moreover, fine adjustment of a volume to a precise level as indicated by digital readout is sometimes difficult to obtain with gloves on because of the limited access or area available for turning the internally positioned volume adjustment mechanism. Further, because of frictional engagement between the volume adjustment mechanism and the surrounding wall surface, a relatively large amount of finger strength is required to make a volume adjustment.

This in mind, the invention as claimed is intended to solve the problem of improving a diluting device of the kind described by rendering the volume adjustment mechanism more accessible for volume adjustment operation without reducing the advantages of the device. At the same time the risk of a rubber glove to be caught in an attempt to orperate the volume adjustment mechanism is to be avoided.

By providing a rotating means of the respective adjustment mechanism which is extractable to an exposed operative position adjustment can easily be performed without the risk of a rubber glove to be trapped and without requiring any substantial finger strength. On the other hand, the extractable rotating means can be returned to a home position in which it does not interfere with normal use of the diluting device.

An extractable knob to operate a rotatable adjustment shaft is principally known from DE-A-2 250 621 yet this disclosure concerns the adjustment of a delicate, e.g. electronic, apparatus where the respective adjusting means are to be protected against damage or unintended operation.

In US Patent US-A-4,501,163 a simple pipet including a single piston for drawing in a single volume is disclosed having an exposed rotatable knob for volume adjustment in addition to a coaxial push button for piston operation. In this case the knob cannot be returned to a home position so that the device requires a relatively long, exposed shaft assembly susceptible to damage as by bending.

Further, US Patent US-A-4,988,481 discloses an electrically operated pipet having a volume adjustment knob that can be moved into a locking home position to avoid accidential volume adjustment. Yet in this case no shaft means are required extending through the knob for operating a piston. Accordingly the aforementioned problem does not exist.

For a better understanding of the present invention, reference should be had to the following detailed description taken in conjunction with the drawings, in which:
FIG. 1 is a side elevational view of a new and improved adjustable diluting device constructed in accordance with the features of the present invention;
FIG. 2 is a perspective view of an external rotating mechanism for rotatively driving a volume adjustment mechanism of the diluting device in accordance with the present invention;
FIG. 3 is a fragmentary cross-sectional view taken substantially along lines 3-3 of FIG. 1 yet with the rotating mechanism of Fig.2 in an internal home position; and
FIG. 4 is a similar fragmentary cross-sectional view showing the rotating mechanism and components of the diluting device in an operational position very similar to that one shown in Fig. 1.

Referring now more particularly to the drawings, therein is illustrated a new and improved continuously adjustable liquid diluting device 10 for mixing a predetermined volume of a liquid sample with a predetermined volume of a liquid diluent and constructed in accordance with the features of the present invention. The device 10 includes an elongated body 12 preferably formed of molded plastic material to include an axially aligned cylindrical recess 14 opening at the upper end of the body. A lower nose portion in the form of a tapered, tubular member 16 is attached to a lower end of the body 12 by means of a fluted nut 18.

As more fully described in the aforementioned U.S. Patent No. 4,141,250, incorporated herein by reference, the diluting device 10 includes first and second chambers in the nose member 16 adapted to hold predetermined volumes of a liquid sample and a liquid diluent which are drawn up through an opening at the lower end 20 of the nose member 16 during a diluting operation.

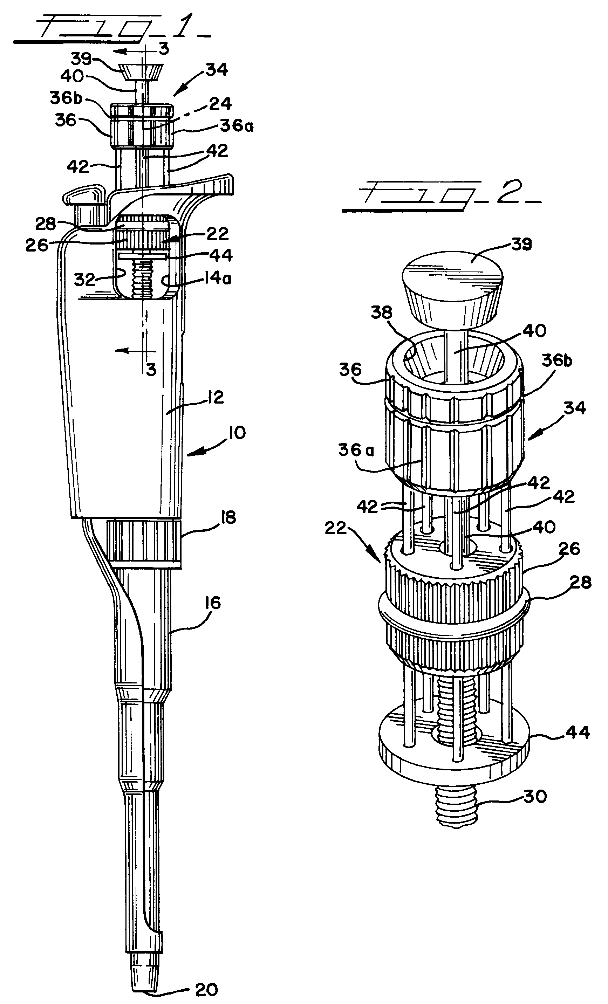

The diluting device 10 includes an internally positioned volume adjustment mechanism 22 mounted for rotation in the body recess 14 for movement along a central axis of the recess indicated by the axial line 24 in FIGS. 1, 3 and 4. The volume adjustment mechanism 22 includes a generally cylindrical knob-like adjustment element 26 formed of molded plastic and provided with an external groove at a mid-level for holding a resilient O-ring 28 adapted to frictionally engage an inside wall surface 14a of the recess 14 to normally retain the position of the adjustment element 26 after an adjustment has been made.

The adjustment element 26 is secured to the upper end of an elongated, hollow, axially extending threaded element 30 which projects downwardly along the axis 24 into the lower end of the body 12 for adjusting the precise volume of a liquid sample that is drawn up into the diluting device 10 as more fully described in U.S. Patent US-A-4,141,250. The body 12 is provided with a pair of oblong windows 32 on opposite sides adjacent the upper end portion for exposing the adjustment element 26 so that manual rotation can be accomplished to provide a precise volume selection as required and as indicated in a digital readout mechanism 29, more fully described in U.S. Patent US-A-4,141,250.

When using the adjustment element 26 to adjust a volume of a liquid sample, sometimes a laboratory worker's glove tends to catch or become lodged in one of the windows 32 between an edge of the adjustment element 26 and the adjacent surface 14a or at the O-ring 28. Moreover, sometimes it is difficult to rotate the adjustment element 26 a desired amount because of the limited access through the windows 32. This is especially true for people not having good finger strength or good manual dexterity.

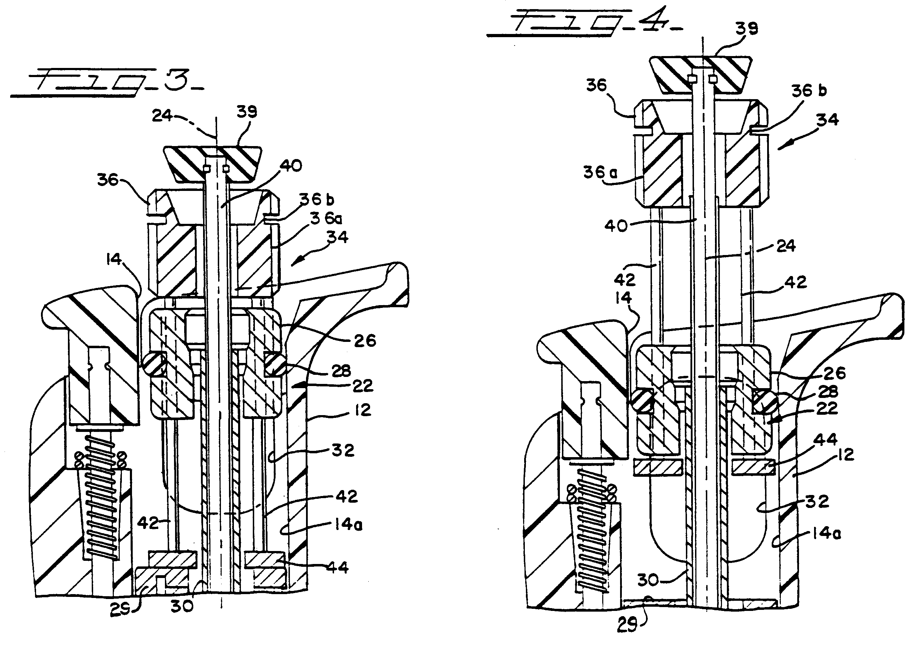

In accordance with the present invention, the diluter device 10 includes a new and improved retractable, external rotating mechanism 34 which is accessible exteriorly of the body 12 for rapidly adjusting the desired volume of liquid to be sampled in the diluter device. The rotating mechanism 34 includes an upper, generally cylindrical, drive knob 36 preferably formed of molded plastic material and provided with a plurality of axially extending grooves or flutes 36a on the outer surface to facilitate turning of the knob manually or with a motor driven friction wheel. The knob 36 also is provided with an annular groove 36b near the upper end to facilitate pulling the knob upwardly from the retracted position of FIG. 3 to an operational position as shown in FIG. 4 ready for manual rotation. The groove 36b permits a user to insert fingernails for easily pulling the knob upwardly.

The knob 36 also includes a frustoconical-shaped recess 38 in the upper, outer end face thereof in coaxial alignment with the axis 24 in order to receive a push button 39 mounted on the upper end of a central shaft 40 of the plunger mechanism of the diluter device. AS described in U.S. Patent US-A-4,141,250, the shaft 40 is displaced longitudinally when operated to withdraw and expel liquid samples into the respective volumes of the device 10.

The external adjustment knob 36 includes a central opening to accommodate the shaft 40 and is secured to the outer ends of a plurality of elongated support elements in the form of rods 42 arranged in parallel with the shaft 40 and spaced equilaterally and radially outwardly thereof to form a cage-like structure as shown in FIGS. 1 and 2. The support rods 42 are slidably supported for axial sliding movement in a plurality of apertures provided in the internally positioned adjustment element 26 and, accordingly, the knob 36 is movable between an inward or retracted position as shown in FIG. 3 and an outward or operative position as shown in FIG. 4, ready for making easy rotary adjustments in the position of the adjustment element 26.

On the inner ends, the rods 42 are connected to a common annular stop ring 44 which is engageable with the lower end of the adjustment element 26 to limit the upward travel of the knob 36. It has been found that the new and improved external rotating mechanism 34 provides a much easier system for rotatively adjusting the adjustment element 26 to select a desired sample volume for the adjustment element 26 to select a desired sample volume for the diluting device 10. The rotating mechanism 34 requires only a few modifications of the structure of the original diluter device of U.S. Patent US-A-4,141,250 but yet provides an adjustment system that is much easier to operate for adjusting sample volumes.

## Claims

1. An adjustable diluting device (10) for mixing a predetermined volume of a liquid sample with a predetermined volume of a liquid diluent, at least one of said volumes being variable, comprising:
- a body (12) having a cylindrical recess (14) open at an upper end of said body (12) and extending downwardly along a central axis (24) thereof;
- first and second chambers adapted to hold predetermined volumes of the sample and the diluent, respectively, drawn up through an opening at the lower end (20) of a nose portion (16);
- a plunger mechanism including a central shaft (40) having a push button (39) mounted to its upper end;
- a volume adjustment mechanism (22) for one of said volumes, rotatably mounted in said recess (14) surrounding said shaft (40) and including a rotating adjustment element (26) frictionally engaging an adjacent wall surface (14a) of said recess (14) for retaining an adjusted position in said recess;
**characterized** by
rotating means (34) including a knob (36) for rotating said adjustment element (26) and supported for longitudinal movement relative thereto along said axis (24) between a retracted position relative to said body (12) and an outwardly extended, externally exposed operative position readily accessible adjacent said open upper end of said body for rotating said adjustment element, said knob (36) being secured adjacent an outer end portion of an elongate support element slidably supported from said adjustment element (26) for movement longitudinally of said axis (24) between said retracted and said operative positions and comprising at least one elongate member (42) slidably mounted in said adjustment element (26) spaced radially outward and parallel of said shaft (40) and stop means (44) secured adjacent the inner end of said elongate member (42) for limiting outward travel of said knob (36) to said operative position.

2. The diluting device (10) of claim 1, wherein said knob (36) and said stop means (44) comprise annular members surrounding said shaft (40) and having a central opening alligned on said axis (24) and wherein opposite ends of a plurality of said elongate elements (42) are secured to said knob and said stop means radially outwardly of said central openings thereof.

3. The diluting device (10) of claim 1 or 2, wherein a plurality of said elongate members (42) in the form of rods are secured to said knob (36) and said stop means (44) radially outwardly of and around said central openings thereof.

4. The diluting device (10) of anyone of the preceding claims: wherein said knob (36) includes an annular groove (36b) for facilitating extraction thereof towards its operative position.

5. The diluting device (10) of anyone of the preceding claims wherein said knob (36) includes a fluted outer surface for facilitating rotation thereof.

6. The diluting device (10) of anyone of the preceding claims, wherein said knob (36) includes a recess (38) in the outer surface thereof for receiving said push button (39) when this is moved towards said knob.

## Patentansprüche

1. Einstellbare Verdünnungsvorrichtung (10) zum Mischen eines vorbestimmten Volumens einer Flüssigkeitsprobe mit einem vorbestimmten Volumen eines flüssigen Verdünnungsmittels, wobei zumindest eines dieser Volumen variabel ist, mit
- einem Körper (12), der eine am oberen Ende des Körpers (12) offene und sich entlang einer zentralen Achse (24) desselben nach unten erstreckende zylindrische Aussparung (14) besitzt,
- ersten und zweiten Kammern zur Aufnahme vorbestimmter Volumen der Probe bzw. des Verdünnungsmittels, die durch eine Öffnung am unteren Ende (20) eines Mündungsabschnitts (16) angesaugt werden,
- einem Kolbenmechanismus einschließlich eines zentralen Schaftes (40) mit einem an seinem oberen Ende angebrachten Schiebeknopf (39),
- einem Volumeneinstellmechanismus (22) für eines der Volumen, der in der genannten, den Schaft umgebenden Aussparung (14) drehbar gelagert ist und ein drehbares Einstellelement (26) in Reibverbindung mit einer benachbarten Wandfläche (14a) der Aussparung (14) zum Festhalten einer eingestellten Position in der Aussparung aufweist,
***gekennzeichnet*** durch
Drehmittel (34) mit einem Knopf (36) zum Drehen des Einstellelements (26) und diesem gegenüber längsbeweglich entlang der Achse (24) zwischen einer eingezogenen Position in bezug auf den Körper 12 und einer ausgefahrenen, außen freiliegenden Arbeitsposition, wo er im Anschluß an das offene obere Ende des Körpers leicht zuganglich ist zur Drehung des Einstellelements, wobei der Knopf (36) nahe dem äußeren Endabschnitt eines langgestreckten Traggliedes angebracht ist, das in dem Einstellelement (26) gleitfähig gelagert ist für eine Bewegung entlang der Achse (24) zwischen der eingezogenen und der Arbeitsposition und zumindest ein langgestrecktes Glied (42) aufweist, das in dem Einstellelement (26) in einem Abstand radial außerhalb und parallel zu dem Schaft (40) gleitfähig gelagert ist und bei seinem inneren Ende Anschlagmittel (44) zur Begrenzung des Auswärtshubes des Knopfes (36) auf die Arbeitsposition aufweist.

2. Verdünnungsvorrichtung (10) nach Anspruch 1, worin der Knopf (36) und die Anschlagmittel (44) den Schaft (40) umgebende ringförmige Glieder aufweisen und eine zentrale Öffnung koaxial mit der Achse (24) besitzen und worin entgegengesetzte Enden einer Mehrzahl dieser langgestreckten Elemente (42) an dem Knopf und den Anschlagmitteln, radial außerhalb von dessen zentraler Öffnung, angebracht sind.

3. Verdünnungsvorrichtung (10) nach Anspruch 1 oder 2, worin eine Mehrzahl der langgestreckten Glieder (42) in Form von Stangen an dem Knopf (36) und den Anschlagmitteln (44) radial außerhalb der und um die zentrale Öffnung desselben herum angebracht sind.

4. Verdünnungsvorrichtung (10) nach einem der vorhergehenden Ansprüche, worin der Knopf (36) eine ringförmige Nut (36b) zur Erleichterung seines Herausziehens zu seiner Arbeitsposition hin aufweist.

5. Verdünnungsvorrichtung nach einem der vorhergehenden Ansprüche, worin der Knopf (36) eine gerändelte Außenfläche zur Erleichterung seiner Drehung aufweist.

6. Verdünnungsvorrichtung (10) nach einem der vorhergehenden Ansprüche, worin der Knopf (36) in seiner Außenfläche eine Aussparung (38) aufweist, um den Schiebeknopf (39) aufzunehmen, wenn dieser gegen den Knopf bewegt wird.

## Revendications

1. Dispositif de dilution réglable (10) pour mélanger un volume prédéterminé d'un échantillon liquide avec un volume prédéterminé d'un diluant liquide, l'un, au moins desdits volumes étant variable, ce dispositif comprenant :
- un corps (12) muni d'un évidement cylindrique (14) ouvert à l'extrémité supérieure dudit corps (12) et s'étendant vers le bas selon l'axe central (24) de celui-ci,
- des première et deuxième chambres aptes à contenir respectivement des volumes prédéterminés de l'échantillon et du diluant, aspirés à travers une ouverture située à l'extrémité inférieure (20) d'une partie (16) en forme de bec,
- un mécanisme plongeur comprenant une tige centrale (40) munie, à son extrémité supérieure, d'un bouton-poussoir (39),
- un mécanisme (22) d'ajustement de l'un desdits volumes, monté rotatif dans ledit évidement (14) qui entoure la tige (40) et comprend un élément d'ajustement rotatif (26) qui coopère par friction avec une surface de paroi (14a) adjacente dudit évidement (14) pour maintenir une position ajustée dans ledit évidement,
caractérisé par des moyens rotatifs (34) comprenant un bouton (36) pour entraîner l'élément d'ajustement (26) en rotation et qui est monté mobile dans la direction longitudinale par rapport à cet élément le long de l'axe (24), entre une position rétractée par rapport audit corps (12) et une position de travail extérieure, où il est à découvert à l'extérieur et facilement accessible au voisinage de l'extrémité supérieure du corps, en vue d'entraîner en rotation l'élément d'ajustement, ledit bouton (36) étant fixé au voisinage d'une région d'extrémité extérieure d'un élément de support allongé qui est porté par ledit élément d'ajustement (26) pour pouvoir coulisser le long de l'axe (24) entre lesdites positions rétractée et de travail, ledit bouton comprenant au moins un élément allongé (42) monté pour pouvoir coulisser dans ledit élément d'ajustement (26) radialement éloigné vers l'extérieur de et parallèle à ladite tige (40) et des moyens d'arrêt (44) fixés à l'extrémité intérieure dudit élément allongé (42) pour limiter la course vers l'extérieur du bouton (36) lorsqu'il se déplace vers sa position de travail.

2. Dispositif de dilution (10) selon la revendication 1, dans lequel ledit bouton (36) et lesdits moyens d'arrêt (44) comprennent des éléments annulaires qui entourent la tige (40) et possèdent une ouverture centrale alignée avec l'axe (24), et dans lequel des extrémités opposées d'une pluralité de tels éléments allongés (42) sont fixées audit bouton et auxdits moyens d'arrêt, radialement à l'extérieur de ladite ouverture centrale de ces derniers éléments.

3. Dispositif de dilution (10) selon la revendication 1 ou 2,
dans lequel une pluralité de ces éléments allongés (42) en forme de tiges est fixée audit bouton (36) et auxdits moyens d'arrêt (44), radialement à l'extérieur et autour de l'ouverture centrale de ces derniers éléments.

4. Dispositif de dilution (10) selon l'une quelconque des revendications précédentes,
dans lequel ledit bouton (36) comprend une rainure annulaire (36b) pour faciliter son extraction vers la position de travail.

5. Dispositif de dilution (10) selon l'une quelconque des revendications précédentes,
dans lequel ledit bouton (36) comprend une surface extérieure nervurée pour faciliter sa rotation.

6. Dispositif de dilution (10) selon l'une quelconque des revendications précédentes,
dans lequel ledit bouton (36) comprend un évidement (38) dans sa surface extérieure pour recevoir le bouton-poussoir (39) lorsque celui-ci est déplacé vers ledit bouton.
